# EUROPÄISCHE PATENTSCHRIFT

(11) **EP 0 329 950 B1**
(45) Veröffentlichungstag und Bekanntmachung des Hinweises auf die Patenterteilung: **20.10.1993**
(21) Anmeldenummer: 89101054.8
(22) Anmeldetag: 21.01.1989
(51) Int. Cl.: F16F 9/46

(54) **Hydraulischer Stossdämpfer**
Hydraulic damper
Amortisseur hydraulique

(30) Priorität: 25.02.1988 DE 3805934
(43) Veröffentlichungstag der Anmeldung: 30.08.1989
(73) Patentinhaber: ROBERT BOSCH GMBH, 70442 Stuttgart (DE)
(72) Erfinder: Taubitz, Bernd, D-7141 Schwieberdingen (DE); Zieher, Peter, D-7147 Eberdingen (DE); Kramer, Claus, Dr.Dipl.-Ing., D-7122 Besigheim (DE); Engelsdorf, Kurt, Dr.-Ing., D-7122 Besigheim 3 (DE); Schuelke, Armin, Dipl.-Ing., D-7140 Ludwigsburg (DE)

(56) Entgegenhaltungen:
- EP-A- 0 122 575
- DE-A- 3 241 984
- DE-A- 3 312 899
- DE-A- 3 635 894
- DE-B- 1 084 528
- FR-A- 2 552 515
- GB-A- 2 119 473

## Beschreibung

Die Erfindung bezieht sich auf einen hydraulischen Stoßdämpfer nach der Gattung des Hauptanspruchs. Ein derartiger Stoßdämpfer ist aus der FR-A-25 52 515 (Figuren 1 und 2) bekannt.

Bei diesem Stoßdämpfer sind die drehbaren Teile des Drehantriebs mit einem aus ferromagnetischem Werkstoff bestehenden Rotor verbunden. Bei Ansteuerung dieses Drehantriebs muß zwecks Aufbau einer Kraft zuerst das ferromagnetische Material des Rotors entsprechend gepolt werden. Auch wenn diese Magnetisierung des ferromagnetischen Materials sehr schnell geschehen kann, so bedeutet es doch, daß nicht beliebig kurze Stellzeiten erreicht werden können.

Damit bei Ausfall des Drehantriebs sich eine vorgesehene Dämpfung einstellt, sind zum Hervorrufen einer Rückstellkraft zusätzlich Rückstellfedern oder eine dauermagnetische Ausbildung des Spulenträgers notwendig.

Ferner ist bei diesem Drehantrieb eine in beide Drehrichtungen wirkende aktive elektromagnetische Verstellung nicht möglich.

Ein anderer bekannter hydraulischer Stoßdämpfer (DE-A-33 12 899) besitzt einen Schrittmotor, mit dem ein Drehschieber schrittweise vor entsprechende Öffnungen in der Kolbenstange gedreht wird. Der Schrittmotor arbeitet nach dem Reluktanzprinzip. Eine magnetisch leitende Hülse weist weichmagnetische Nocken auf, die von im Stator befindlichen Elektromagneten angezogen und dadurch in eine bestimmte Stellung gedreht werden. Der Antrieb basiert auf den unterschiedlichen magnetischen Leitwerten, hervorgerufen durch die Nocken. Die Verwendung eines Rotors mit einer glatten Oberfläche ist deshalb nach diesem Prinzip nicht möglich.

Durch die Bewegung der Nocken in der stoßdämpfenden Flüssigkeit, wird eine erhebliche Flüssigkeitsreibung erzeugt, aus der eine große Dämpfung des Systems resultiert. Wegen der Temperaturabhängigkeit der Viskosität der Dämpferflüssigkeit wird die Dämpfung temperaturabhängig veränderlich und muß bei der Regelung des Systems berücksichtigt werden.

Die Schrittweite eines Schrittmotors ist ohne einen erheblichen Mehraufwand bei der Elektronik (Halbschrittverfahren) nach unten begrenzt. Eine feine Stufung ist deshalb nicht möglich. Die Schrittweite ist bei einem gegebenen Schrittmotor nicht variabel. Sie kann deshalb während des Betriebs nicht an die Erfordernisse angepaßt werden.

Die Statorwicklung des Antriebs besteht aus mehreren Spulen die abwechselnd von Strom durchflossen werden. Das Drehmoment wird daher immer nur von einer einzigen Spule erzeugt, so daß ein großer Teil des vorhandenen Wickelraumes zu jedem Zeitpunkt ungenutzt bleibt.

Zur Sicherheitsrückstellung im Falle eines Defekts in der Ansteuerung ist eine Rückstellfeder vorgesehen, deren Verwendung ebenfalls nachteilig ist.

Da der bekannte Stoßdämpfer einen Kolben mit mechanischen Druckfedern für ein Grunddämpfungsventil aufweist, wird von dem beschriebenen Drehschieber-Ventil nur ein Bypass-Drosselquerschnitt variiert.

Durch die Anordnung des Drosselquerschnittes in der hohlen Kolbenstange wird schließlich der Gesamtquerschnitt vom Durchmesser der Stange begrenzt und kann nicht optimal an einen geforderten Gesamtdurchfluß angepaßt werden.

### Vorteile der Erfindung

Der eingangs genannte hydraulische Stoßdämpfer mit den kennzeichnenden Merkmalen des Hauptanspruchs hat demgegenüber den Vorteil, daß er ein Stetigstellsystem aufweist, das je nach Ansteuerung eine stufige oder stetige Verstellung bewirken kann. Dabei wird der gesamte Drosselquerschnitt des Dämpfungskolbens verstellt. Es wird also kein Schrittmotor verwendet, und bei einer gewollten stufigen Verstellung ist die Anzahl der Stufen nur von der Auflösung eines zusätzlichen Positionssensors begrenzt. Die Schrittweite ist also variabel und kann zur Linearisierung der Kraft-Weg-Kennlinie des Dämpfers verwendet werden. Auch kann durch Verwendung besonderer Steuerquerschnitte die Stetigverstellung optimiert werden. Da das Stellsystem mit dauermagnetischen Polen im Rotor ausgerüstet ist, liefert es auch stromlos ein Drehmoment, das in vorteilhafter Weise für eine Sicherheitsrückstellung genutzt wird. Eine Rückstellfeder kann damit entfallen.

Dazu kommt der weitere Vorteil, daß die Wicklung des vorgeschlagenen Antriebs aus einer einzigen Spule besteht. Die Herstellung der Wicklung wird dadurch vereinfacht und der vorhandene Wickelraum wird optimal zur Erzeugung des Drehmomentes genutzt.

Vorteil hafte Ausgestaltungen der Erfindung ergeben sich aus den Merkmalen der Unteransprüche.

So ist es auch vorteilhaft, daß die drehenden Teile mit einer glatten Oberfläche versehen sind. Dadurch wird die Flüssigkeitsreibung und die Dämpfung des Stellsystems vermindert. Die Viskosität der Dämpferflüssigkeit und ihre Temperaturabhängigkeit brauchen deshalb bei der Ansteuerung des Stellers nicht berücksichtigt zu werden.

Desweiteren ist auch von Vorteil, daß einzig der gesamte Drosselquerschnitt verstellt wird. Durch die Anordnung des Drehschiebers an der Kolbenstange und nicht über der Kolbenstange ist der Drosselquerschnitt durch Wahl des Durchmessers des Drehschiebers leicht an den geforderten Gesamtdurchfluß anpaßbar.

Schließlich hat, je nach Ausgestaltung, der erfindungsgemäße Stoßdämpfer den Vorteil eines hohen Drebmomentes, eines geringen Trägheitsmomentes, einer geringeren Dämpfung der Dämpfer-Verstellung, eines kleinen Drehwinkels und einer geringen Reibung.

### Zeichnung

Ein Ausführungsbeispiel der Erfindung ist in der Zeichnung dargestellt und in der nachfolgenden Beschreibung näher erläutert. Es zeigen: Figur 1 den Stoßdämpfer im Schnitt, Figur 2 einen Spulenträger des Drehstellers im Schnitt, Figur 3 den Rotor des Drehstellers in Vorder- und Seitenansicht, Figur 4 eine Abwicklung der Zylindermantelflache des Drehschiebers und Figur 5 einen Schnitt durch Steuerschieber und Steuerspiegel.

### Beschreibung des Ausführungsbeispiels

Ein hydraulischer Stoßdämpfer 1 hat ein zylindrisches Mantelrohr 2, das unten mit einem Boden 3 versehen ist, mit dem es an einer nicht dargestellten Fahrzeugachse befestigt ist. Das andere, obere Ende des Mantelrohrs 2 ist mit einem Deckel 4 verschlossen, der eine druckdichte Durchführung 5 für eine Kolbenstange 6 aufweist, deren oberes Ende mit einem nicht dargestellten Fahrzeugaufbau verbunden ist. Am unteren Ende trägt die Kolbenstange 6 einen Dämpferkolben 7, der im Mantelrohr 2 gleitbeweglich ist und der mit einer Kolbendichtung 8 im Inneren des Stoßdämpfers zwei Arbeitskammern 9 und 10 voneinander trennt. Die Kolbenstange 6 und der Dämpferkolben 7 sind hohl ausgeführt, letzterer hat ein Gehäuse 11 mit einer Ausnehmung 12 zur Aufnahme eines elektromagnetischen Drehstellers 13 und eines hydraulischen Steuerschiebers 14. In einem Ansatz 15 des Kolben-Gehäuses 11 ist ein Positionssensor 16 vorgesehen.

Schließlich befindet sich anschließend an die Arbeitskammer 9 noch ein gasgefüllter Ausgleichsraum 17, der von der Kammer 9 durch einen Kolben 18 getrennt ist und der zum Volumenausgleich beim Ein- und Ausfahren der Kolbenstange 6 dient.

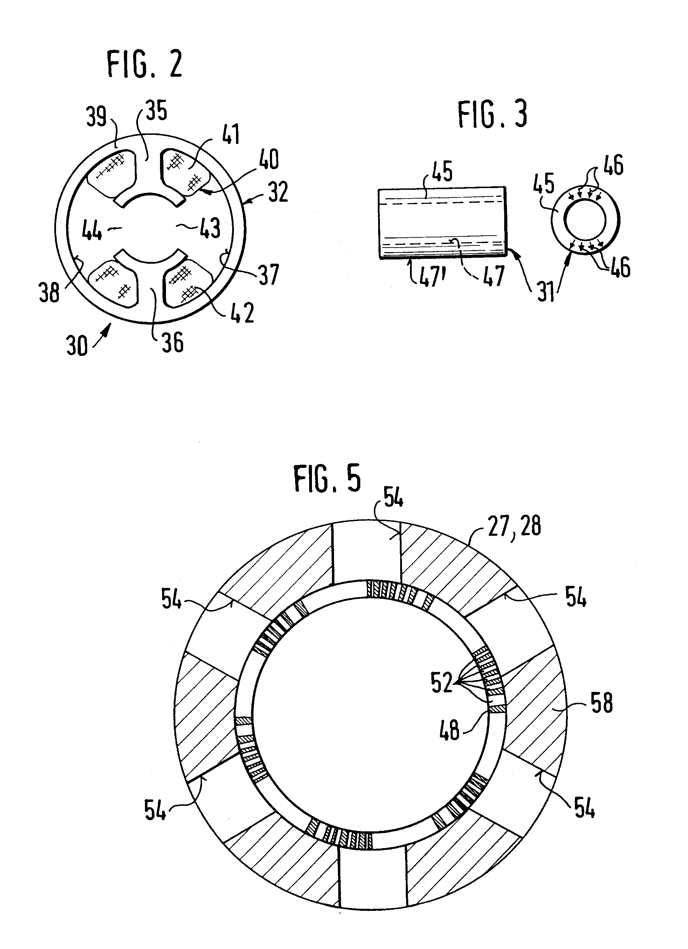

In das Kolbengehäuse 11 ist von oben ein Gehäuseflansch 19 eingeschraubt, der mehrere, gleichmäßig auf Umfang verteilte Axialdurchbrüche 20 für den Flüssigkeitsdurchgang aufweist. Ein oberer Rohransatz 21 des Flansches 19 nimmt das innere Ende der Kolbenstange 6 auf und ist mit einem Abdichtpfropfen 22 versehen für eine elektrische Leitungsdurchführung eines Elektro-Anschlusses 23. Ein unterer Rohransatz 24 des Flansches 19 enthält ein Kugellager 25 für eine Drehsteller-Welle 26, in die unmittelbar unter dem Kugellager 25 ein Querstift 27 diametral eingepreßt ist. Die herausstehenden Enden des Querstiftes 27 werden von einer Nut 28 des Rohransatzes 24 aufgenommen, die sich azimutal über einen Winkel erstreckt, der größer ist als ein Stellbereich des Drehstellers 13 (vgl. auch Figur 5). Der in die Kolbengehäuse-Ausnehmung 12 eingesetzte Drehsteller 13 besteht aus einem Stator 30 und einem Rotor 31. Der Stator hat ein Ständerblechpaket 32 und eine Wicklung 33 mit einem Wickelkopf 34. Die Stator-Einzelteile sind noch einmal in der Figur 2 dargestellt, die einen Quer-Schnitt durch das Ständerblechpaket 32 zeigt. Dieses weist zwei Zähne 35 und 36, zwei Nuten 37 und 38 und einen magnetischen Rückschluß 39 auf. In die Nuten 37 und 38 ist eine Spule 40 eingesetzt, die in zwei Hälften 41 und 42 aufgeteilt ist. Die beiden Spulen-Hälften 41 und 42 sind in Reihe geschaltet und um je einen Zahn 35 bzw. 36 gewickelt. Die Wicklung 33 wird durch die Öffnungen 43 und 44 der Nuten 37 und 38 in die Nuten eingelegt.

Die Figur 3 zeigt den Rotor 31 des Drehstellers 13. Er ist als Hohlzylinder 45 ausgeführt. Der Zylinder 45 besteht aus einem hartmagnetischen Material, z.B. SmCo und ist, wie die Pfeile 46 erkennen lassen, diametral magnetisiert. Seine Mantelflächen 47 und 47' sind glatt geschliffen. Sein Außenumfang ist etwa gleich dem Außenumfang der Kolbenstange 6.

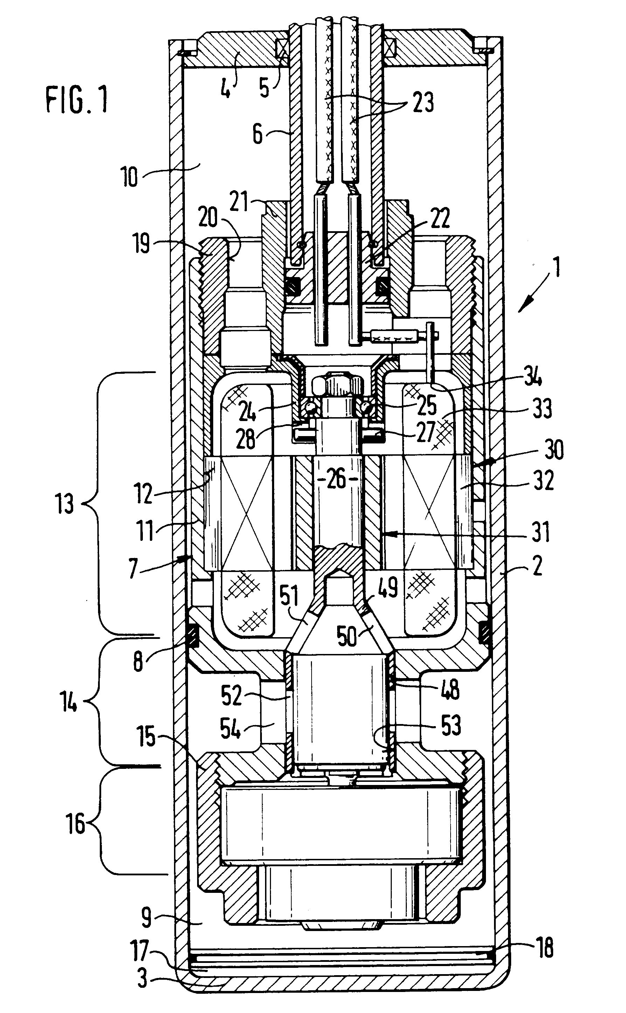

Wie in Figur 1 zu erkennen ist, hat der vom Drehsteller 13 betätigbare Steuerschieber 14 einen Drehschieber 48, der durch Aufweiten des unteren Teiles der Welle 26 gebildet ist. An der Stelle der Aufweitung 49 ist diese mit zwei Durchbrüchen 50, 51 für den Flüssigkeitsdurchgang versehen. Der Drehschieber 48 hat Radialdurchbrüche 52 als Steueröffnungen und ist in eine Gehäuseausnehmung 53 des Dämpferkolbens 7 eingesetzt, die als hohlzylindrischer Schieberspiegel 58 ebenfalls mit Radialdurchbrüchen 54 als Steueröffnungen versehen ist. Drehschieber 48 und Schieberspiegel 58 sind in der Figur 5 noch einmal im Schnitt dargestellt. Dort ist zu erkennen, daß der Schieberspiegel 58 auf 360° sechs gleichmäßig verteilte Radialdurchbrüche 54 als Steueröffnungen hat und daß die Radialdurchbrüche 52 des Drehschiebers 48 verschieden breite Schlitze sind, die sich auf einen Winkel als Stellbereich von weniger als 30° erstrecken und sich ebenso wie die Durchbrüche 54 sechsmal auf 360° wiederholen. Bei jeweils 30° Ausschlag nach links oder rechts wird die Drehbewegung des Rotors 31 durch einen Anschlag 27/28 begrenzt, der durch das Ende der Nut 28 für den Querstift 27 gebildet wird.

Die möglichen sieben Stellstufen werden jeweils so realisiert, daß bei jedem Stellbereich eine bestimmte Anzahl von Schlitzen 52 vor die Durchbrüche 54 gedreht wird. Der jeweils hydraulische Drosselquerschnitt ergibt sich als Summe aller Schlitzen 52 der sechs Steuerbereiche, die vor die Durchbrüche 54 gelangen.

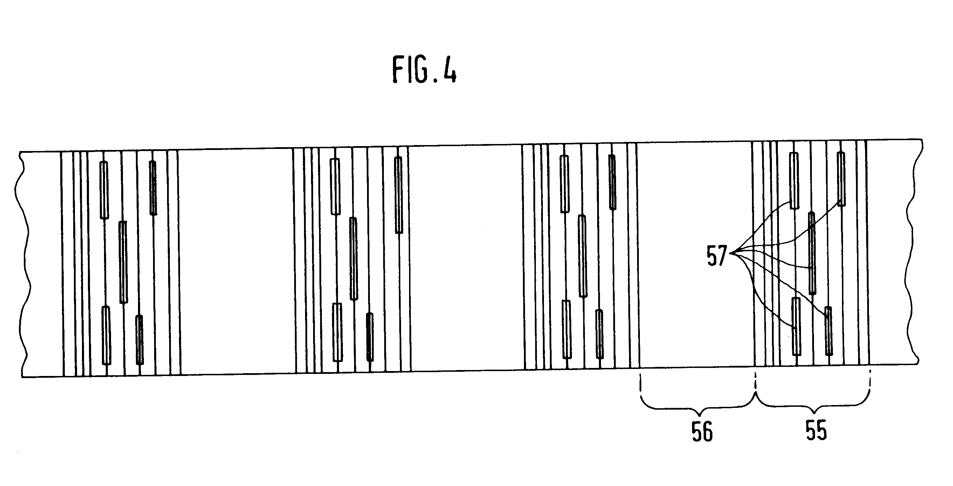

In der Figur 4 ist eine Abwicklung des Drehschiebers 48 dargestellt. Es ist zu erkennen, daß der Drehschieber sieben Stufen hat, die durch die Durchbrüche 52 des Drehschiebers 48 gebildet werden. Von diesen stellt die erste Stufe eine geschlossene Stufe dar, welche durch Leckage den Grunddurchfluß des Stoßdämpfers bestimmt. Von den sechs anderen Stufen sind in der Figur 4 nur vier dargestellt.

### Wirkungsweise

Bei nicht angesteuertem Stoßdämpfer wirken im Drehsteller 13 nur die permanentmagnetischen Kräfte, die den Steuerschieber 14 in seiner den Grunddurchfluß bestimmenden ersten Stufe festhalten. Diese Stellung nimmt der Steuerschieber auch bei Ausfall der Signal- bzw. Leistungselektronik ein.

Abhängig vom Fahrzeug- und Straßenzustand verstellt der permanenterregte Drehsteller 13 den hydraulischen Drosselquerschnitt im Steuerschieber 14, über den allein die Dämpferflüssigkeit von der einen Arbeitskammer des Stoßdämpfers zu der anderen Arbeitskammer fließt.

Zum Verstellen des Stoßdämpfers wird die Wicklung 33 des elektromagnetischen Drehstellers 13 mit einer Wechselstrombrückenschaltung (H-Schaltung) gespeist, d.h. es werden zwei Stromrichtungen bereitgestellt. Das Drehmoment des Drehstellers entsteht aus dem Zusammenwirken des Spulenfeldes und des permanenterregten Rotorfeldes.Die Richtung des Stellmomentes wird von der jeweiligen Stromrichtung bestimmt. Das bezugsmäßig größte Drehmoment wird in derjenigen Stellung erreicht, in der Stator- und Rotorfeld einen Winkel von 90° zueinander bilden, wenn die Ankerrückwirkung vernachlässigt wird. In dieser Stellung steht die Mitte der permanentmagnetischen Rotorpole am Luftspalt den Nutöffnungen 43 und 44 (Figur 2) gegenüber. Ausgehend von dieser Stellung verläuft das Drehmoment über einen Winkelbereich von ± 90° annähernd trapezförmig für eine feste Stromstärke. Um für den aktiven Stellbereich ein möglichst großes Stellmoment zu erreichen, ist der maximale Stellbereich symmetrisch zu der obengannten Stellung gelegt und auf 30° beschränkt. Durch eine entsprechende Positionsregelung mit unterlagerter Stromregelung läßt sich jeder beliebige Winkel innerhalb des aktiven Stellbereiches einstellen.

Neben dem jeweiligen, durch Zusammenwirken von Stator- und Rotorfeld verursachten Stellmoment weist der elektromagnetische Drehsteller 13 noch ein weiteres Drehmoment auf, das aus der Anziehungskraft zwischen den Magnetpolen und den Statorzähnen 35 und 36 resultiert. Dieses sich dem Stellmoment überlagernde Rastmoment tritt auch bei stromloser Spule auf. Es dreht den Rotor 31, abhängig von der jeweiligen Lage desselben, entweder in Richtung des ersten oder des zweiten Ständerzahnes 35, 36. Die Bewegung wird im stromlosen Zustand durch den Anschlag 27/28 begrenzt.

Wie in der Abwicklung der Zylindermantelfläche des Drehschiebers 48 zu erkennen ist, ist die Mantelfläche in Steuerbereiche 55 und Schließbereiche 56 unterteilt. Während die Schließbereiche 56 aus Vollmaterial bestehen, sind die Steuerbereiche 55 in dieser Ausführungsform durch verschieden lange und breite Steuerschlitze 57 dargestellt. Durch Verdrehen der Steuerbereiche 55 teilweise oder ganz vor im Schieberspiegel 58 befindliche rechteckige Durchbrüche 54 wird der hydraulische Drosselquerschnitt variiert, und zwar in sieben Stufen. Die eigentliche Steuerkante, die durch eine Seite des Durchbruchs 54 gebildet wird, wird hierbei in die Mitte zwischen zwei Steuerschlitze 57 auf einen Steg positioniert. Die Grunddämpfung bei vollständiger Überdeckung von Durchbruch 54 und Schließbereich 56 wird durch den Grunddurchfluß gewährleistet. Eine Anpassung der Dämpferkraft-Winkelkennlinie des Dämpfers läßt sich in dieser Ausführungsform durch entsprechende Dimensionierung der Schlitzflächen erreichen. Als weitere Ausführungsformen sind stetige Verstellmöglichkeiten des Drosselquerschnitts denkbar, z.B. rechteckförmig, dreiecksförmig oder in einer beliebigen Form durchbrochene Steurbereiche, mit denen die Dämpferkraft-Winkelkennlinie leicht anpaßbar ist.

Das beschriebene Ausführungsbeispiel des erfindungsgemäßen hydraulischen Stoßdämpfers hat folgende Vorteile:
1. Aktives, d.h. elektromagnetisch betätigtes Öffnen und Schließen des Drosselquerschnittes. Hierdurch werden gleiche Stellzeiten für beide Drehrichtungen erreicht.
2. Geringe Abhängigkeit der Stellzeiten von Temperatur. Durch den glatten Aufbau des Hohlzylinders 45 des Drehstellers 13 ist die Flüssigkeitsreibung gering. Eine Verdrängung der Dämpferflüssigkeit, wie sie bei einem Längssteller auftritt, wird durch die Drehbewegung vermieden. Hierdurch ergibt sich eine geringe Dämpfung des Drehstellers. Der Einfluß einer temperaturabhängigen Zähigkeit auf die Dämpfung der Stellbewegung ist dadurch vernachlässigbar. Die Stellzeiten sind nahezu unabhängig von der Temperatur der Dämpferflüssigkeit.
3. Vereinfachte Positionsregelung durch eine lineare Strom-Drehmomentkennlinie des Drehstellers 13. Die Strom-Drehmomentkennlinie ist prinzipbedingt angenähert linear. Durch den großen Luftspalt tritt im Gegensatz zu einem Längsstellsystem keine magnetische Hysterese auf.
4. Einfache Anpassung der Dämpferkraft-Winkelkennlinie durch entsprechende Gestaltung der Steuerbereiche des Drehschiebers 48.
5. Eine stufige Verstellung der Dämpferkraft ist möglich.
6. Einfacher modularer Anbau des Positionssensors an das Stellsystem (keine Integration des Sensors in den Steller).
7. Durch den relativ großen Stellwinkel des Drehstellers 13 von fast 30° wird eine weitgehende Variation des gesamten Drosselquerschnittes des Dämpfers ermöglicht. Damit ist eine optimale Anpassung des Dämpfers an den jeweiligen Straßen- und Fahrzeugzustand möglich.
8. Durch die hohe Stellgeschwindigkeit können transiente Zustandsänderungen ausgeregelt werden.

## Patentansprüche

1. Hydraulischer Stoßdämpfer mit selbsttätig einstellbarer Dämpferkraft, mit einem Zylinder und einem in dem Zylinder beweglichen, das Zylinderinnere in zwei Kammern (9, 10) trennenden und einen steuerbaren Durchlaßquerschnitt aufweisenden Dämpferkolben (7) und einer mit dem Kolben verbundenen, durch ein Ende des Zylinders nach außen herausragenden Kolbenstange (6), sowie mit einem elektromagnetischen Drehsteller (13) für einen einen Durchlaßquerschnitt überwachenden Steuerschieber, wobei der Drehsteller (13) eine dauer magnetische Sicherheitsrückstellung aufweist, dadurch gekennzeichnet, daß der Drehsteller (13) einen zweipoligen Spulenträger (30) mit einer Wicklung aus einer einzigen Magnetspule (40) und einen Rotor (31) mit zwei dauermagnetischen Polen umfaßt, so daß sich bei dem Drehsteller (13) durch eine Steuerelektronik die Verdrehposition von Spulenträger (30) und Rotor (31) einstellen läßt.

2. Stoßdämpfer nach Anspruch 1, dadurch gekennzeichnet, daß ein permanentmagnetischer Rotor (31) verwendet ist, der bei einer bipolaren Speisung zwei aktive Drehmoment-Richtungen aufweist.

3. Stoßdämpfer nach Anspruch 2, dadurch gekennzeichnet, daß der Rotor (31) hohlzylindrisch ausgebildet ist und glatte, vorzugsweise geschliffene Mantelflächen (47, 47') hat.

4. Stoßdämpfer nach einem der Ansprüche 1 bis 3, dadurch gekennzeichnet, daß der den Rotor (31) aufnehmende Spulenträger (30) aus Einzelblechen (Ständerblechpaket 32) besteht und daß die Magnetspule (40) in zwei in Reihe geschalteten Spulenhälften (41, 42) aufgeteilt ist.

5. Stoßdämpfer nach einem der Ansprüche 1 bis 4, dadurch gekennzeichnet, daß der Dämpferkolben (7) eine von einem Kolbengehäuse (11) umschlossene Ausnehmung (12) aufweist, in welche der elektromagnetische Drehsteller (13) eingesetzt ist.

6. Stoßdämpfer nach einem der Ansprüche 1 bis 5, dadurch gekennzeichnet, daß der Außendurchmesser des Rotors (31) des Drehstellers (13) etwa gleich ist mit dem Außendurchmesser der Kolbenstange (6).

7. Stoßdämpfer nach einem der Ansprüche 3 bis 6, dadurch gekennzeichnet, daß der hohlzylindrische Rotor (31) des Drehstellers (13) eine Drehsteller-Welle (26) aufnimmt, die an ihrem Ende einen Drehschieber (48) des Steuerschiebers (14) trägt, und daß die Drehsteller-Welle (26) mit einem Anschlag (27/28) für ihren Drehwinkel versehen ist.

8. Stoßdämpfer nach Anspruch 7, dadurch gekennzeichnet, daß auch der Steuerschieber (14) in die Kolbengehäuse-Ausnehmung (12) eingesetzt ist und daß die Ausnehmung (12) einen hohlzylindrischen Schieberspiegel (58) hat, in den der Drehschieber (48) des Steuerschiebers (14) eingesetzt ist.

9. Stoßdämpfer nach Anspruch 8, dadurch gekennzeichnet daß die Ausnehmung im Kolbengehäuse (12) und der Stator (30) von der Stoßdämpferflüssigkeit durchströmbar ist und daß ein Spalt zwischen Drehschieber (48) und Schieberspiegel (58) einen Grunddurchfluß des Dämpferkolbens bestimmt.

10. Stoßdämpfer nach einem der Ansprüche 5 bis 9, dadurch gekennzeichnet, daß am Dämpferkolben (7) ein Positionssensor (16) zum Sensieren der jeweiligen Lage des Drehschiebers (48) in bezug auf den Schieberspiegel (58) vorgesehen ist und daß der Positionssensor (16) in einen Ansatz (15) des Kolbengehäuses (11) eingesetzt ist.

11. Stoßdämpfer nach Anspruch 10, dadurch gekennzeichnet, daß zum Selbstregeln des Stoßdämpfers eine Steuerelektronik vorgesehen ist und daß der am Dämpferkolben (7) angeordnete Positionssensor (16) durch die Kolbenstange (6) hindurch ein Ist-Signal an die Steuerelektronik liefert.

## Claims

1. Hydraulic shock absorber with shock absorber force which can be automatically set, having a cylinder and a shock absorber piston (7) which can move in the cylinder, separates the inside of the cylinder into two chambers (9, 10) and has a controllable passage cross-section, having a piston rod (6) connected to the piston and protruding outwards through one end of the cylinder and having an electromagnetic rotary actuator (13) for a control valve monitoring a passage cross-section, the rotary actuator (13) having a permanent-magnet safety reset, characterised in that the rotary actuator (13) includes a two-pole coil carrier (30) with a winding of a single magnet coil (40) and a rotor (31) with two permanent-magnet poles, so that the angular position of the coil carrier (30) and the rotor (31) can be set by the rotary actuator (13) by means of control electronics.

2. Shock absorber according to Claim 1, characterised in that a permanent-magnet rotor (31) is used which exhibits two active torque directions in the case of a bipolar feed.

3. Shock absorber according to Claim 2, characterised in that the rotor (31) is configured as a hollow cylinder and has smooth, preferably ground generated surfaces (47, 47').

4. Shock absorber according to one of Claims 1 to 3, characterised in that the coil carrier (30) accommodating the rotor (31) consists of individual laminations (stator lamination set 32) and in that the magnet coil (40) is divided into two coil halves (41, 42) connected in series

5. Shock absorber according to one of Claims 1 to 4, characterised in that the shock absorber piston (7) has a recess (12), which is surrounded by a piston casing (11) and into which the electromagnetic rotary actuator (13) is inserted

6. Shock absorber according to one of Claims 1 to5, characterised in that the outer diameter of the rotor (31) of the rotary actuator (13) is approximately equal to the outer diameter of the piston rod (6).

7. Shock absorber according to one of Claims 3 to 6, characterised in that the hollow-cylindrical rotor (31) of the rotary actuator (13) accommodates a rotary-actuator shaft (26), which carries a rotary spool (48) of the control valve (14) at its end, and in that the rotary-actuator shaft (26) is provided with a stop (27/28) for its angle of rotation.

8. Shock absorber according to Claim 7, characterised in that the control valve (14) is also inserted in the piston-casing recess (12) and in that the recess (12) has a hollow-cylindrical spool mating part (58) in which the rotary spool (48) of the control valve (14) is inserted.

9. Shock absorber according to Claim 8, characterised in that the shock absorber fluid can flow through the stator (30) and the recess in the piston casing (12) and in that a gap between the rotary spool (48) and the spool mating part (58) determines a basic flow through the shock absorber piston.

10. Shock absorber according to one of Claims 5 to 9, characterised in that a position sensor (16) is provided on the shock absorber piston (7) for sensing the particular position of the rotary spool (48) relative to the spool mating part (58) and in that the position sensor (16) is inserted in an extension (15) of the piston casing (11).

11. Shock absorber according to Claim 10, characterised in that control electronics are provided for automatic control of the shock absorber and in that the position sensor (16) arranged on the shock absorber piston (7) supplies an actual condition signal to the control electronics through the piston rod (6).

## Revendications

1. Amortisseur hydraulique à réglage automatique de la force d'amortissement, comportant un cylindre dans lequel peut coulisser un piston amortisseur (7) divisant le cylindre en deux chambres (9, 10) et présentant une section de passage réglable, une tige (6) liée au piston et dépassant à l'intérieur à une extrémité du cylindre, un actuateur rotatif (13) électromagnétique commandant un tiroir de commande contrôlant la section de passage et équipé d'un rappel de sécurité à magnétisme permanent, caractérisé en ce que l'actuateur rotatif (13) comporte un porte-bobine (30) à deux pôles et un enroulement fait d'une seule bobine (40), un rotor (31) à deux pôles à magnétisme permanent, tandis qu'un circuit électronique commande l'actuateur (13) de manière à régler par rotation les positions relatives du porte bobine (30) et du rotor (31).

2. Amortisseur selon la revendication 1, caractérisé en ce que le rotor (31) à magnétisme permanent , au couple duquel une alimentation bipolaire donne deux directions actives.

3. Amortisseur selon la revendication 2, caractérisée en ce que le rotor (31) est un cylindre creux dont les parois cylindriques (**47**, **47**') sont lisses, de préférence polies.

4. Amortisseur selon une des revendications 1 a 3, caractérisé en ce que le porte-bobine (30) entourant le rotor (31) est constitué de tôles (constituant un empilage 32), la bobine (40) étant divisée en deux demi-bobines (41, 42) montées en série.

5. Amortisseur selon une des revendications 1 à 4, caractérisé en ce que le boîtier (11) du piston amortisseur (7) comporte un évidement (12) dans lequel est logé l'actuateur rotatif électromagnétique (13).

6. Amortisseur selon une des revendications 1 à 5, caractérisé en ce que le diamètre externe du rotor (31) de l'actuateur (13) est sensiblement égal au diamètre externe de la tige de piston (6).

7. Amortisseur selon une des revendication 3 à 6, caractérisé en ce que le rotor cylindrique creux (31) de l'actuateur (13) reçoit un arbre d'actuateur (26) portant à une de ses extrémités un tiroir rotatif (48) du dispositif de commande à tiroir (14), l'arbre (26) étant équipé d'une butée (27,28) limitant sa rotation.

8. Amortisseur selon la revendication 7, caractérisé en ce que le dispositif de commande à tiroir (14) est logé à l'intérieur du boîtier du piston, dans un évidement (12) qui constitue le fourreau cylindrique creux (58) à l'intérieur duquel est introduit le tiroir rotatif (48).

9. Amortisseur selon la revendication 8, caractérisé en ce que l'évidement (12) du boîtier de piston et le stator (30) peuvent être traversés par le fluide hydraulique de l'amortisseur, l'intervalle séparant le tiroir rotatif (48) et son fourreau (58) déterminant le débit de base du piston de l'amortisseur.

10. Amortisseur selon un des revendications 5 à 9, caractérisé en ce que le piston amortisseur (7) est équipé d'un détecteur de position (16) déterminant la position du tiroir rotatif (48) par rapport à son fourreau (58) et situé dans un embout (15) du boîtier du piston (11).

11. Amortisseur selon la revendication 10, caractérisé en ce que la régulation automatique de l'amortisseur est assurée par un circuit électronique de commande, le détecteur (16) monté dans le piston amortisseur (7) fournissant au circuit électronique, à travers la tige du piston (6) le signal donnant la position réelle du piston.
